(19) Europäisches Patentamt
European Patent Office
Office européen des brevets

(11) **EP 1 993 060 A1**

(12) **EUROPEAN PATENT APPLICATION**

(43) Date of publication:
**19.11.2008 Bulletin 2008/47**

(51) Int Cl.:
***G06K 9/00*** (2006.01)

(21) Application number: **07009738.1**

(22) Date of filing: **15.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Continental Automotive GmbH**
**30165 Hannover (DE)**

(72) Inventors:
• **Birla, Manish**
 **560075 Bangalore (IN)**
• **Chattopadhyay, Rita**
 **560037 Bangalore (IN)**
• **Vikram KN**
 **560055 Bangalore (IN)**

(54) **Device for object detection in an image, and method thereof**

(57) The present invention relates to a device and a method for detecting an object in a digital image (42) using a field programmable gate array (74). The proposed device includes an image acquisition interface (78) adapted for receiving pixel values of an input digital image (42) from an image sensor (72), and writing the received pixel values on to a plurality of addressable image buffers (88,90,92) contained. The proposed device further includes feature extraction means (80) adapted for reading the pixel values from at least one addressable image buffer, out of the plurality of addressable image buffers (88,90,92), and extracting a plurality of feature vectors for a window (40) within the digital image (42). A decision logic (98) is provided that is adapted for performing an arithmetic operation on the extracted feature vectors and corresponding support vectors stored in an internal memory means (89), and deciding the presence of an object in the window (40) based upon a result of the arithmetic operation.

FIG 9

**EP 1 993 060 A1**

**Description**

The present invention relates to image processing, particularly to systems for detecting objects in images.

Real-time detection of objects, such as pedestrians, has assumed importance in the field of intelligent transportation systems. These systems are meant to have a partially or fully automatic driver assistance system. The various tasks involved in such automatic vehicle guidance systems are lane detection, obstacle detection, traffic sign recognition, pedestrian detection, etc. Among these tasks, carrying out detection of pedestrians is very computationally intensive, and successful execution of the task in real-time remains a challenge.

Traditionally, personal computer (PC) based systems have been used for executing the complex video processing algorithms involved in pedestrian detection. These PC based systems exhibit poor performance in terms of processed video frames per second. Further, they are not suitable for deployment in vehicles due to their inherently large size and electrical power requirement.

It is an object of the present invention to provide an improved means for detecting objects in images.

The above object is achieved by a device for detecting an object in a digital image, said device implemented on a field programmable gate array, comprising:

- a plurality of addressable image buffers,
- an image acquisition interface adapted for receiving pixel values of an input digital image from an image sensor, and writing the received pixel values on to said plurality of addressable image buffers,
- feature extraction means adapted for reading said pixel values from at least one addressable image buffer, out of said plurality of addressable image buffers, and extracting a plurality of feature vectors for a window within said digital image,
- internal memory means for storing a plurality of support vectors, and
- decision logic adapted for performing an arithmetic operation on said extracted feature vectors and corresponding support vectors stored in said internal memory means, and deciding the presence of an object in said window based upon a result of said arithmetic operation.

The above object is achieved by a method for detecting an object in a digital image using a field programmable gate array, said method comprising:

- receiving pixel values of an input digital image from an image sensor, and writing the received pixel values on to a plurality of addressable image buffers,
- reading said pixel values from at least one addressable image buffer, out of said plurality of addressable image buffers, and extracting a plurality of feature vectors for a window within said digital image, and
- performing an arithmetic operation on said extracted feature vectors and corresponding support vectors stored in an internal memory means, and deciding the presence of an object in said window based upon a result of said arithmetic operation.

The underlying idea of the present invention is to provide a technique for object detection in an image using an embedded system based on a field programmable gate array (FPGA) and using support vector machine, such that high performance is achieved in real-time while meeting the constraints of low power consumption and smaller size.

In one embodiment, said feature extraction means and said decision logic are configured such that said feature vector extraction and said arithmetic operation of the decision logic are performed in parallel. The above feature advantageously allows use of hardware resources of the FPGA in a manner that exploits parallelism in design to achieve higher performance.

In a further embodiment, the proposed device further comprises tagging logic adapted for triggering generation of a tag for said window upon decision that an object is present in said window. This facilitates display of a tag, such as a boundary, around a window wherein an object of interest is detected.

In one embodiment, said arithmetic operation comprises computing a vector dot product of each feature vector of said window and the corresponding support vector stored in said internal memory means, and summing up said vector dot products, wherein presence of an object is decided if said summation is greater than a threshold value. The above provides particularly advantageous means for detecting an object in an image using support vector machines.

In the illustrated embodiment, said window is formed by a sliding rectangular sized region within said digital image. Advantageously, this allows a captured digital image to be analyzed in terms of smaller units of data in parallel to other computations.

In a particularly preferred embodiment, said feature extraction means comprises a first and a second feature extraction module, wherein

- said first feature extraction module is adapted for reading pixel values from a first addressable image buffer, of said plurality of addressable image buffers, and extracting a first set of feature vectors for said window by computing vertical, horizontal and corner coefficients for a sliding mask of a first scale across said window, and
- said second feature extraction module is adapted for reading pixel values from a second addressable image buffer, of said plurality of addressable image buffers, and extracting a second set of feature vectors for said window by computing vertical, horizontal and corner coefficients for a sliding mask of a second scale across said window.

The above feature allows feature vector extraction at multiple scales of detection.

In one embodiment, said first and second feature extraction modules and said first and second addressable image buffers are configured such that extraction of the first set of feature vectors by said first feature extraction module and extraction of the second set of feature vectors by said second feature extraction modules are performed in parallel.

In a further preferred embodiment, said vertical, horizontal and corner coefficients are obtained by extracting a pixel value of at least one specified pixel in said sliding masks of the first scale and the second scale. Use of only specified pixel values, instead of all pixel values for a mask, simplifies the extraction of the feature vectors and advantageously provides a real-time performance of about 50 frames per second.

The present invention is further described hereinafter with reference to illustrated embodiments shown in the accompanying drawings, in which:

FIG 1 is a high level block diagram of an image processing system,

FIG 2 is an exemplary flowchart illustrating operational steps for detecting the presence of an object in a digital image,

FIG 3 is a diagrammatical representation of a sliding window over a digital image,

FIG 4 is a diagrammatical representation of a scale-16 mask operation of a window,

FIG 5 is a diagrammatical representation of a scale-32 mask operation of a window

FIG 6 is a diagrammatical illustration of a Haar wavelet to compute vertical coefficients for a mask,

FIG 7 is a diagrammatical illustration of a Haar wavelet to compute horizontal coefficients for a mask,

FIG 8 is a diagrammatical illustration of a Haar wavelet to compute corner coefficients for a mask, and

FIG 9 is a block diagram of a field programmable gate array (FPGA) based hardware architecture for detecting an object in a digital image according to an embodiment of the present invention.

Before describing the proposed device and the operations performed to detect an object in a digital image, some of the terminology used herein will be explained.

An analog or continuous parameter image such as a still photograph may be represented as a matrix of digital values and stored in a storage device, such as that of a computer, an embedded system, or other digital processing device. Thus, as described herein, the matrix of digital data values are generally referred to as a "digital image" or more simply an "image" and may be stored in a digital data storage device, such as a memory for example, as an array of numbers representing the spatial distribution of energy at different wavelengths in a scene.

Similarly, an image sequence such as a view of a moving pedestrian for example, may be converted to a digital video signal as is generally known. The digital video signal is provided from a sequence of discrete digital images or frames. Each frame or image may be represented as a matrix of digital data values which may be stored in a storage device, such as that of a computer, an embedded system or other digital processing device. Thus in the case of video signals, as described herein, a matrix of digital data values are generally referred to as an "image frame" or more simply an "image" or a "frame." Each of the images in the digital video signal may be stored in a digital data storage device, such as a memory for example, as an array of numbers representing the spatial distribution of energy at different wavelengths in a scene in a manner similar to the manner in which an image of a still photograph is stored.

Whether provided from a still photograph or a video sequence, each of the numbers in the array correspond to a digital word (e.g. an eight-bit binary value) typically referred to as a "pixel value" or as "image data." The image may be divided into a two dimensional array of pixels with each of the pixels represented by a pixel value comprising a digital word.

Reference is also sometimes made herein to an image as a two-dimensional pixel array. An example of an array size is an array having 512 rows and 512 columns (denoted 512x512). Specific reference is sometimes made herein to operation on arrays having a particular size (e.g. 128x64, 32x32, 16x16, etc). One of ordinary skill in the art will of course recognize that the techniques described herein are applicable to various sizes and shapes of pixel arrays including irregularly shaped pixel arrays.

A scene is an image or a single representative frame of video in which the contents and the associated relationships within the image can be assigned a semantic meaning. A still image may be represented, for example, as a pixel array having 512 rows and 512 columns. An "object" is defined as an identifiable entity in a scene in a still image or a moving or non-moving entity in a video image.

Further, it should be appreciated that, for the sake of illustration, reference is made herein to operation on images which include pedestrians. It should be noted, however, that the techniques described herein are not limited to use of detection or classification of pedestrians in images. Rather, the techniques described herein can also be used to detect and/or classify a wide variety of objects within images including but not limited to pedestrians, faces, automobiles, animals, and other objects. Accordingly, those of ordinary skill in the art will appreciate that the description and processing taking place on objects which represent pedestrians or images which include objects which represent pedestrians, could equally be taking place on objects which do not represent pedestrians.

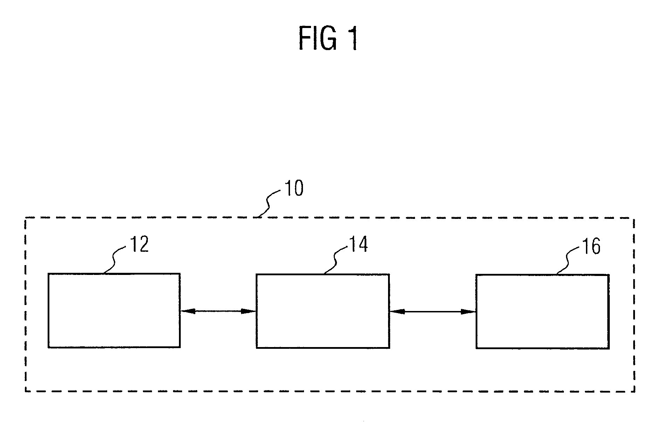

Referring now to FIG 1, an exemplary object detection system 10 in accordance with the present invention comprises a video capturing device 12, such as a video camera, an image processing unit 14, and an output display device 16, along with some memory storage and input/output devices. In accordance with the present invention, the image processing unit 14 is implemented on a field programmable gate array (hereinafter referred to as FPGA), described in greater detail below.

The proposed system is implemented based on the concept of support vector machines (SVM). This involves capturing the required features that need to be detected (such as pedestrian), in the form of a vector of data called support vectors. Support vectors are generated offline, by adopting a training mechanism using a database of images that are typical to the scenario in which the system will be used. Different scenarios, such as low-lighting conditions, can be taken care of by using an appropriate image database for generating the support vectors. The support vectors thus generated are then used in the FPGA based system, to detect an object (such as a pedestrian) in the real-time image data.

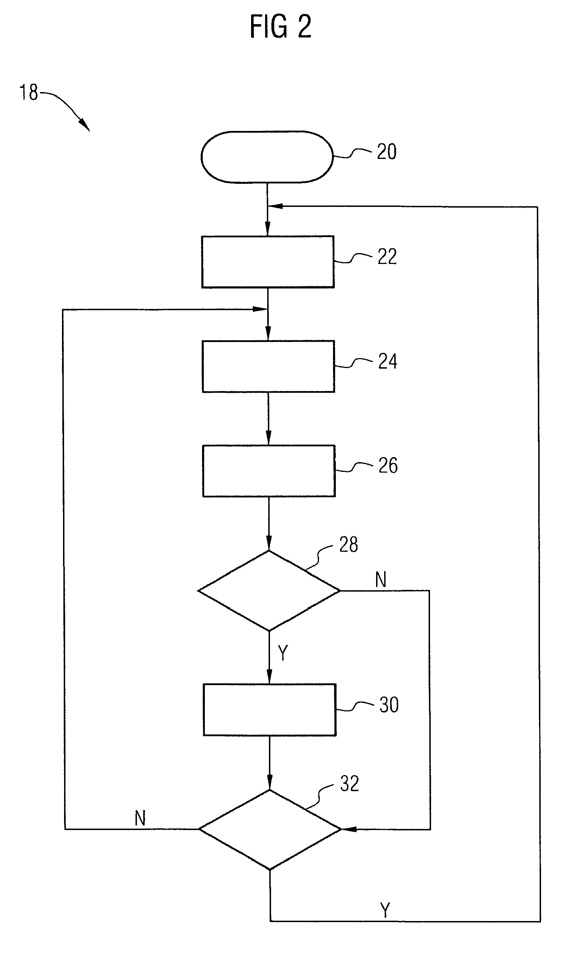

Referring to FIG 2, an illustrative description is made of the operational tasks, represented by a method 18, carried out by the FPGA hardware for detecting the presence of an object. In the embodiment presented herein, the object of interest is representative of a pedestrian.

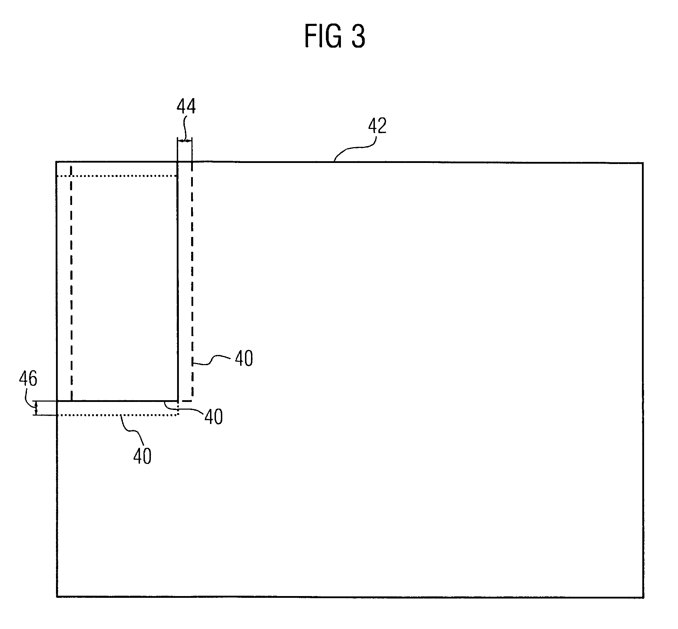

As shown, after startup 20, the method 18 repeatedly carries out a set of operations, described as follows. A frame (image) of video is first captured (step 22) by the camera and fed to the image processing unit. In the illustrated example the captured video frame is of size 320x240 pixels. This frame is analyzed in terms of smaller units of data, called windows. In this example, each window is of size 64x128 pixels. As shown in FIG 3, each window 40 of size 64x128 pixels is formed by overlapping rectangular sized regions that slide across the input frame 42 of size 320x240 pixels. In one embodiment, between consecutive windows in the horizontal direction, the horizontal overlap 44 may be equal to four pixels. Likewise, between consecutive windows in the vertical direction, the vertical overlap 46 may also be equal to four pixels. As can be calculated the total number of horizontally overlapping windows is 65 while the total number of vertically horizontally windows is 29. Hence, for any video frame 42, the total number of windows to be analyzed would be 1885 (65 times 29). Detection of a pedestrian is carried out for each window, based on an SVM based approach as described below.

Referring back to FIG 2, at step 24, for every window considered in the frame, a set of feature vectors meant to capture the existence of a pedestrian are extracted. In the illustrated example, feature vectors are extracted for two scales of detection, i.e. scale-16 and scale-32. That is to say, a first set of feature vectors are extracted by computing vertical, horizontal and corner coefficients of a sliding mask of size 16x16 pixels across the window of size 64x128 pixels. This is referred to as scale-16 feature extraction. Likewise, a second set of feature vectors are extracted by computing vertical, horizontal and corner coefficients of a sliding mask of size 32x32 pixels across the window of size 64x128 pixels. The above is referred to as scale-32 feature extraction.

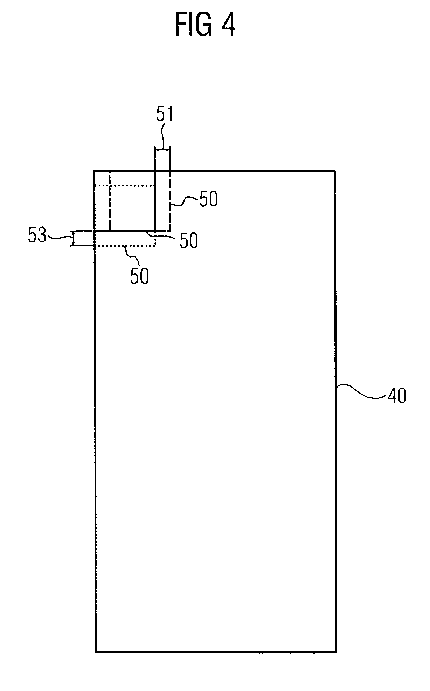

Referring to FIG 4, sliding masks 50 of size 16x16 pixels are illustrated for a window 40 of size 64x128 pixels. In one embodiment, the horizontal overlap 51 and the vertical overlap 52 between consecutive 16x16 masks 50 may each be equal to four pixels. Accordingly, there would be 13 horizontally overlapping masks and 29 vertically overlapping masks, and the total number of 16x16 masks for the window 40 can be calculated to be 377 (13 times 29).

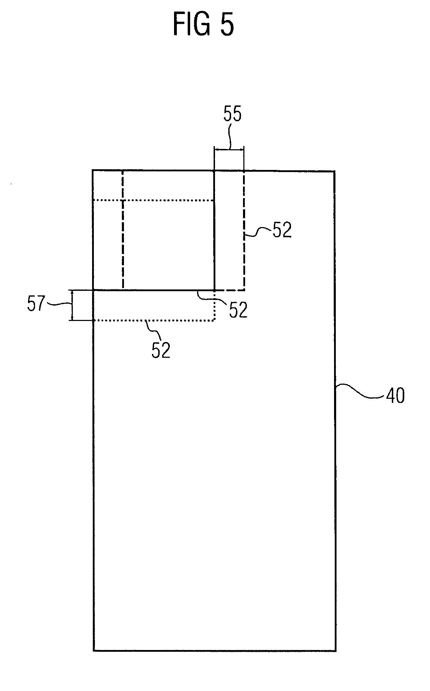

FIG 5 shows sliding masks 52 of size 32x32 pixels for the window 40 of size 64x128 pixels. In one embodiment, the horizontal overlap 55 and the vertical overlap 57 between consecutive 32x32 masks 52 may each be equal to eight pixels. Accordingly, there would be five horizontally overlapping masks and 13 horizontally overlapping masks, and the total number of 32x32 masks for the window 40 can be calculated to be 65 (five times 13).

In this example, for every window, three feature vectors are extracted for each of scale-16 and scale-32. These include a vertical feature vector, a horizontal feature vector, and a corner feature vector. For each scale of feature extraction, the elements of the vertical, horizontal and corner feature vectors respectively comprise vertical, horizontal and corner coefficients computed for each mask of that scale. Hence it can be seen that the three feature vectors extracted for scale-16 comprise 377 elements each, while the three feature vectors extracted for scale-32 comprise 65 elements each. Thus, a total of six feature vectors are generated for each window.

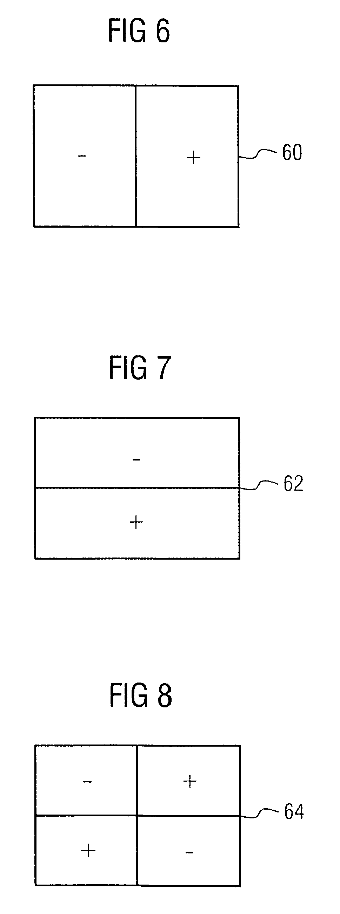

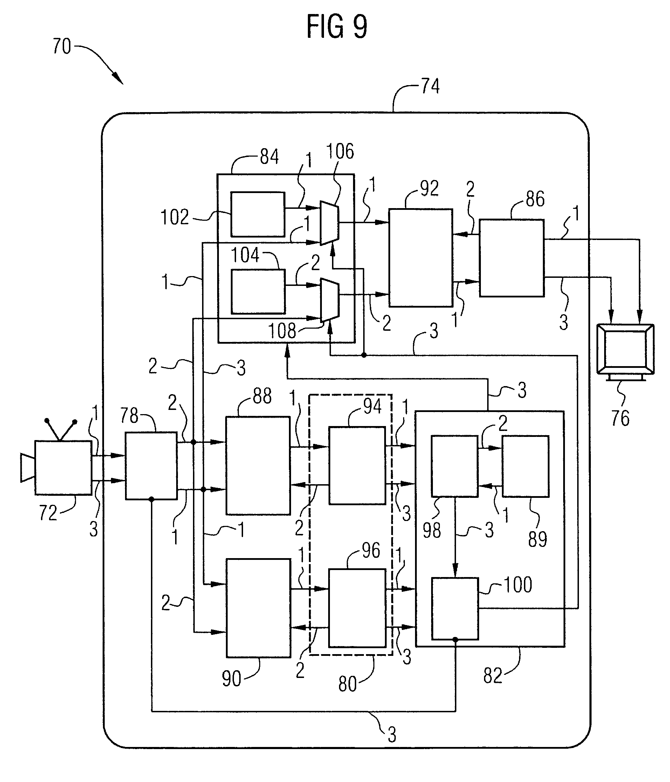

Vertical, horizontal and corner coefficients may be computed for each of scale-16 and scale-32 by considering each mask as two-dimensional Haar wavelets as shown in FIGS 6-8. The vertical, horizontal and corner coefficients respectively capture the change in intensity along the vertical direction, the horizontal direction and the diagonals (or corners). For each mask a vertical coefficient may be computed by extracting pixel values for all pixels from the mask, and summing them up after assigning the appropriate sign depending on the position of the pixel in the vertical wavelet 60 shown in FIG 6. In a similar manner, horizontal and corner coefficients may be computed with the extracted pixel values and using the appropriate signs (based on the position of a pixel) indicated respectively on a horizontal wavelet 62 (shown in FIG 7) and a corner wavelet 64 respectively (shown in FIG 9).

In order to speed up the computation involved, instead of extracting pixel values for each pixel of a mask and performing the above-described computations on those pixels, a single specified pixel value, preferably a corner pixel value may be picked up for each mask to represent a vertical, horizontal, or corner coefficient of that mask, by assigning the appropriate sign on that pixel value depending upon the position of the specified pixel. Using the above technique, a high real-time performance of about 50 frames per second may be achieved.

Referring back to FIG 2, once the feature vectors are extracted for a given window, a set of arithmetic operations are performed at step 26. These may include computation of a dot product of each feature vector with a corresponding support vector stored in a memory means within the FPGA. As can be seen, in the present example, for each window, 6 dot products would have to be computed. In one embodiment, the dot product of a feature vector $fV$ with a corresponding support vector $SV$ may be computed using a relationship (1) below:

$$\left| \frac{fV}{nV} - mV \right| \bullet SV \qquad - \ (1)$$

Wherein $nV$ is a normalization vector, and $mV$ is a mean vector, both $nV$ and $mV$ being predetermined constants for a given operation.

In order to obviate the recurring division operation on the feature vector, the above computation may be efficiently implemented using a simplified relationship (2) given below:

$$\left| fV - mV \bullet nV \right| \bullet \left( \frac{SV}{nV} \right) \qquad - \ (2)$$

The dot products so obtained are then summed together to give a single result for each window. At step 28, if the computed result exceeds a specific threshold value, the presence of pedestrian is detected in the window under consideration. At step 30, a tag is generated for the window, for example by drawing a box around the window, and displayed through the output display device. Subsequent to step 30, or when the computed result at step 28 does not exceed the threshold value, control moves to step 32, wherein a check is made to determine if all windows in the frame have been processed. If the result is positive, control returns to step 22, wherein the next frame (image) captured by the camera is fed to the image processing unit. If the result at step 32 is negative, control returns to step 24, wherein feature vectors are extracted, as discussed above, for the next window of the frame.

The hardware architecture for the pedestrian detection system implemented on an FPGA is shown in FIG 9. The different functional modules shown in the FPGA correspond to the different functions shown in the flowchart in FIG 2. Data lines, address lines and control lines are respectively denoted by reference numerals 1, 2 and 3 in FIG 9.

As shown, an FPGA implemented pedestrian detection system 70 includes an image sensor 72, such as a CMOS image sensor, an image processing unit comprising an FPGA 74 and an output display device 76. Functional units of the FPGA 74 broadly include an image acquisition interface 78, a feature extraction means 80, a classifier module 82, a tag generator 84 and an output display interface 86. The FPGA also includes memory means 89 for storing pre-generated support vectors. No external off-chip memory is used, thereby avoiding time consuming external memory access cycles. The proposed design optimally utilizes the internally available on-chip memory of FPGA. The functional blocks are explained in detail below.

The image acquisition interface 78 receives image data (pixel values) for an input image (frame) from the image sensor 72 and writes the image data to a plurality of addressable image buffers in the FPGA. For higher performance, it is desirable to use the hardware resources of the FPGA in a manner that exploits parallelism in design. Accordingly a plurality of image buffers are provided for storing image data such that various operations such as feature extraction and tagging are performed in parallel by reading image data from the respective image buffer. In the illustrated embodiment, three addressable image buffers 88, 90 and 92 are provided for writing image data into. In practice, these image buffers may be physically located in one or more memory chips on the FPGA 74. The image acquisition interface 78 correctly decodes the control signals obtained from the image sensor 72 and also generates the required addresses for the image buffers 88, 90 and 92. In a preferred embodiment, the image acquisition interface 78 is designed as a dedicated CMOS camera interface controlled by FPGA hardware. This allows the on-chip image buffers 88, 90 and 92 to be directly filled. Further, multiple image buffers can be written simultaneously in the internal memory of FPGA. This speeds up the frame grabbing for the pedestrian detection system. In a traditional processor based system external memory is used and transfer from the external memory can be done only to one of the internal memory blocks.

The feature extraction means 80 is adapted to read the image data from the addressable image buffers and extract plurality of feature vectors for each window within said digital image. In the illustrated embodiment, the feature extraction means 80 includes a scale-16 feature extraction module 94 and a scale-32 feature extraction module 96, operable to extract two sets of feature vectors for each window, comprising three scale-16 feature vectors and three scale-32 vectors, as described earlier with respect. Thus total of six feature vectors are generated for each window. The illustrated embodiment allows extraction of the feature vectors to be performed in parallel. This is because the scale-16 feature extraction module 94 and the scale-32 feature extraction module 96 are capable of reading image data independently and in parallel from the image buffers 88 and 90 respectively.

The classifier module 82 consists of two sub-modules, namely, decision logic 98 and tagging logic 100. Decision logic 98 performs the arithmetic operation on the extracted feature vectors using corresponding support vectors stored in the internal memory means 89. Decision logic in the described FPGA based system involves arithmetic operations that are carried out in a pipelined fashion in order to obtain high throughput. As mentioned earlier, the result of these arithmetic operations is used to decide presence of a pedestrian in the window under consideration. If a window has pedestrian in it, the window number is passed to the tagging logic 100, which in turn triggers the creation of a tag for the window, in the output image. This tag may include, for example, a visible boundary around the window.

As mentioned above, image data is also written into the image buffer 92 by the image acquisition interface 76. The output display interface 86 reads image data from the image buffer 92 and generates the control signals for the display of this image on the output display device 76, which may include a VGA monitor.

The tag generator 84 is configured to generate a tag for a window wherein an object of interest (such as a pedestrian) has been detected. The tag generator 84 includes a tag data generator 102 and a tag address generator 104. Multiplexers 106 and 108 are provided which operate such that when the output of the tagging logic 100 indicates a "not detected" state, the image buffer 92 only receives image data and addresses from the image acquisition interface 78. However, when the output of the tagging logic indicates a "detected" state, the multiplexers 106 and 108 operate such that the image buffer 92 only receives tag data and tag addresses respectively from the tag data generator 102 and the tag address generator 105, which is then subsequently sent to the output display interface 74 for display of a visible tag for the concerned window. In the proposed FPGA, the tag generator 84 operates in parallel with the rest of the computations, thereby saving the time required for indicating pedestrians in the output video. Contemporary systems slow down under real conditions when pedestrians are detected, since tagging is a time consuming process.

Several important advantages may be realized by the embodiments illustrated above. First, the hardware resources of the FPGA are used methodically to eliminate the need for normal sequence of instruction fetch and decode inherent in a processor based design. Since such instruction cycles are time consuming and sequential in nature, use of new approach results in faster processing speed. Moreover, the SVM algorithm has been adapted to achieve real-time performance of 50 frames per second. This is because the feature vector extraction was simplified to a large extent by using only specified pixel values such as the corner pixel value of each mask. Also, size and resource requirements are greatly reduced as there is no need of external off-chip memory etc. Further, time and resource consuming operations in FPGA have been replaced with efficient operations yielding same output. Complex arithmetic operations are avoided. For example, division arithmetic is replaced by multiplication with pre-computed vectors.

The proposed technique is particularly advantageous for pedestrian detection. Further, using the proposed technique, it may be also possible to implement additional features like tracking the pedestrian in real-time. Since the proposed system is vision based, detection is possible from larger distances, ensuring safety of pedestrian. As pedestrians can be detected at very high speed, the proposed system can be advantageously used for high vehicle speeds. Also, such a system can display the detected pedestrian on a display device such as an LCD screen. This system can also be deployed in smart homes/offices for human-intrusion detection in real-time. The underlying hardware may be reconfigured to suit any new algorithms or features.

Summarizing, the present invention relates to a device and a method for detecting an object in a digital image using a field programmable gate array (FPGA). The proposed device includes an image acquisition interface adapted for receiving pixel values of an input digital image from an image sensor, and writing the received pixel values on to a plurality of addressable image buffers contained. The proposed device further includes feature extraction means adapted for reading the pixel values from at least one addressable image buffer, out of the plurality of addressable image buffers, and extracting a plurality of feature vectors for a window within the digital image. A decision logic is provided that is adapted for performing an arithmetic operation on the extracted feature vectors and corresponding support vectors stored in an internal memory means, and deciding the presence of an object in the window based upon a result of the arithmetic operation.

**Claims**

1. A device for detecting an object in a digital image (42), said device implemented on a field programmable gate array (74), comprising:

   - a plurality of addressable image buffers (88,90,92),
   - an image acquisition interface (78) adapted for receiving pixel values of an input digital image (42) from an image sensor (72), and writing the received pixel values on to said plurality of addressable image buffers (88,90,92),
   - feature extraction means (80) adapted for reading said pixel values from at least one addressable image buffer (88, 90), out of said plurality of addressable image buffers (88,90,92), and extracting a plurality of feature vectors for a window (40) within said digital image (42),
   - internal memory means (89) for storing a plurality of support vectors, and
   - decision logic (98) adapted for performing an arithmetic operation on said extracted feature vectors and corresponding support vectors stored in said internal memory means (89), and deciding the presence of an object in said window (40) based upon a result of said arithmetic operation.

2. The device according to any of the preceding claims, wherein said feature extraction means (80) and said decision logic (98) are configured such that said feature vector extraction and said arithmetic operation of the decision logic (98) are performed in parallel.

3. The device according to any of the preceding claims, further comprising tagging logic (100) adapted for triggering generation of a tag for said window (40) upon decision that an object is present in said window (40).

4. The device according to any of the preceding claims, wherein said arithmetic operation comprises computing a vector dot product of each feature vector for said window (40) and the corresponding support vector stored in said internal memory means (89), and summing up said vector dot products, wherein presence of an object is decided if said summation is greater than a threshold value.

5. The device according to any of the preceding claims, wherein said window (40) is formed by a sliding rectangular sized region within said digital image (42).

6. The device according to any of the preceding claims, wherein said feature extraction means (80) comprises a first and a second feature extraction module (94 and 96), wherein

   - said first feature extraction module (94) is adapted for reading pixel values from a first addressable image buffer (88), of said plurality of addressable image buffers (88,90,92), and extracting a first set of feature vectors for said window (40) by computing vertical, horizontal and corner coefficients for a sliding mask (50) of a first scale across said window (40), and
   - said second feature extraction module (96) is adapted for reading pixel values from a second addressable image buffer (90), of said plurality of addressable image buffers (88,90,92), and extracting a second set of feature vectors for said window (40) by computing vertical, horizontal and corner coefficients for a sliding mask (52) of a second scale across said window (40).

7. The device according to claim 6, wherein said first and second feature extraction modules (94 and 96) and said first and second addressable image buffers (88,90) are configured such that extraction of the first set of feature vectors by said first feature extraction module (94) and extraction of the second set of feature vectors by said second feature extraction modules (96) are performed in parallel.

**8.** The device according to any of claims 6-7, wherein said vertical, horizontal and corner coefficients are obtained by extracting a pixel value of at least one specified pixel in said sliding masks (50, 52)) of the first scale and the second scale.

**9.** A method for detecting an object in a digital image (42) using a field programmable gate array (74), said method comprising:

- receiving pixel values of an input digital image (42) from an image sensor (72), and writing the received pixel values on to a plurality of addressable image buffers (88,90,92),
- reading said pixel values from at least one addressable image buffer, out of said plurality of addressable image buffers (88,90,92), and extracting a plurality of feature vectors for a window (40) within said digital image (42), and
- performing an arithmetic operation on said extracted feature vectors and corresponding support vectors stored in an internal memory means (89), and deciding the presence of an object in said window (40) based upon a result of said arithmetic operation.

**10.** The method according to claim 9, comprising performing said feature vector extraction and said arithmetic operation in parallel.

**11.** The method according to any of claims 9 and 10, further comprising generation of a tag for said window (40) upon decision that an object is present in said window (40).

**12.** The method according to any of claims 9-11, wherein said arithmetic operation comprises computing a vector dot product of each feature vector of said window (40) and the corresponding support vector stored in said internal memory means (89), and summing up said vector dot products, wherein presence of an object is decided if said summation is greater than a threshold value.

**13.** The method according to any of claims 9-12, wherein said window (40) is formed by a sliding rectangular sized region within said digital image (42).

**14.** The method according to any of claims 9-13, wherein extracting a plurality of feature vectors for said window (40) comprises:

- reading pixel values from a first addressable image buffer (88), of said plurality of addressable image buffers (88,90,92), and extracting a first set of feature vectors for said window (40) by computing vertical, horizontal and corner coefficients for a sliding mask (50) of a first scale across said window (40), and
- reading pixel values from a second addressable image buffer (90), of said plurality of addressable image buffers (88,90,92), and extracting a second set of feature vectors for said window (40) by computing vertical, horizontal and corner coefficients for a sliding mask (52) of a second scale across said window (40).

**15.** The method according to claim 14, wherein said extraction of the first set of feature vectors and said extraction of the second set of feature vectors are performed in parallel.

**16.** The method according to any of claims 14 and 15, wherein said vertical, horizontal and corner coefficients are obtained by extracting a pixel value of at least one specified pixel in said sliding masks (50, 52) of the first scale and the second scale.

## FIG 1

# FIG 2

# FIG 3

# FIG 4

# FIG 5

## FIG 6

```
┌──────────┬──────────┐
│          │          │
│    -     │    +     │      ~ 60
│          │          │
└──────────┴──────────┘
```

## FIG 7

```
┌─────────────────────┐
│          -          │
├─────────────────────┤      ~ 62
│          +          │
└─────────────────────┘
```

## FIG 8

```
┌──────────┬──────────┐
│    -     │    +     │
├──────────┼──────────┤      ~ 64
│    +     │    -     │
└──────────┴──────────┘
```

# FIG 9

European Patent Office

**EUROPEAN SEARCH REPORT**

Application Number

EP 07 00 9738

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YU WEI ET AL: "FPGA implementation of adaboost algorithm for detection of face biometrics" BIOMEDICAL CIRCUITS AND SYSTEMS, 2004 IEEE INTERNATIONAL WORKSHOP ON SINGAPORE 1-3 DEC. 2004, PISCATAWAY, NJ, USA,IEEE, 1 December 2004 (2004-12-01), pages 317-320, XP010810053 ISBN: 0-7803-8665-5 * abstract * * page 317, column 1, paragraph 1 * page 318, column 1, section 2.2 * page 318, column 2, paragraph 1 * page 318, column 2, section 3 * figure 1 * * figure 2 * ----- | 1-16 | INV. G06K9/00 |
| X | REYNA R A ET AL: "Implementation of the SVM neural network generalization function for image processing" COMPUTER ARCHITECTURES FOR MACHINE PERCEPTION, 2000. PROCEEDINGS. FIFTH IEEE INTERNATIONAL WORKSHOP ON PADOVA, ITALY 11-13 SEPT. 2000, LOS ALAMITOS, CA, USA,IEEE COMPUT. SOC, US, 11 September 2000 (2000-09-11), pages 147-151, XP010515303 ISBN: 0-7695-0740-9 * abstract * page 148, column 1, section 2 ----- -/-- | 1-5,7, 9-13,15 | TECHNICAL FIELDS SEARCHED (IPC) G06K |

The present search report has been drawn up for all claims

| Place of search | Date of completion of the search | Examiner |
|---|---|---|
| Munich | 24 September 2007 | Turina, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**EUROPEAN SEARCH REPORT**

Application Number

EP 07 00 9738

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZEHANG SUN ET AL: "A real-time precrash vehicle detection system" APPLICATIONS OF COMPUTER VISION, 2002. (WACV 2002). PROCEEDINGS. SIXTH IEEE WORKSHOP ON 3-4 DEC. 2002, PISCATAWAY, NJ, USA,IEEE, 3 December 2002 (2002-12-03), pages 171-176, XP010628744 ISBN: 0-7695-1858-3 * abstract * * page 171, column 2, last paragraph - page 172, column 1, paragraph 2 * * page 173, column 1, paragraph 1 * * page 173, column 2, last paragraph * * page 176, column 1, paragraph 2 * ----- | 1,3,4,6, 8,9,11, 12,14,16 | |

TECHNICAL FIELDS
SEARCHED (IPC)

The present search report has been drawn up for all claims

| Place of search | Date of completion of the search | Examiner |
|---|---|---|
| Munich | 24 September 2007 | Turina, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)